# EUROPÄISCHE PATENTSCHRIFT

(11) **EP 2 885 162 B1**
(45) Veröffentlichungstag und Bekanntmachung des Hinweises auf die Patenterteilung: **23.03.2016**
(21) Anmeldenummer: 13745585.3
(22) Anmeldetag: 02.08.2013
(51) Int. Cl.: B60R 5/04, B60Q 3/06

(54) **HALTERUNG ZUR AUFHEBBAREN ARRETIERUNG EINES LADERAUMBODENS SOWIE FAHRZEUG MIT DER HALTERUNG**
HOLDER FOR REVOCABLY LOCKING A LUGGAGE COMPARTMENT FLOOR AND VEHICLE WITH THE HOLDER
ÉLÉMENT DE RETENUE PERMETTANT LE BLOCAGE LIBÉRABLE D'UN PLANCHER DE COMPARTIMENT DE CHARGEMENT ET VÉHICULE POURVU DUDIT ÉLÉMENT DE RETENUE

(30) Priorität: 18.08.2012 DE 102012016440
(43) Veröffentlichungstag der Anmeldung: 24.06.2015
(73) Patentinhaber: Audi AG, 85045 Ingolstadt (DE)
(72) Erfinder: ADOLF, Robert, 85051 Ingolstadt (DE); SCHWAB, Tobias, 85049 Ingolstadt (DE)
(74) Vertreter: Schuster, Simon
(86) Internationale Anmeldenummer: PCT/EP2013/002314
(87) Internationale Veröffentlichungsnummer: WO 2014/029467

(56) Entgegenhaltungen:
- DE-A1- 10 260 984
- DE-A1- 10 335 582
- DE-A1-102004 031 004
- DE-A1-102007 042 371
- DE-A1-102011 010 458

## Beschreibung

Die vorliegende Erfindung betrifft eine Halterung gemäß dem Oberbegriff von Anspruch 1 sowie ein Fahrzeug mit einer erfindungsgemäßen Halterung.

Es sind (Kraft)Fahrzeuge bekannt, die im Bereich ihres Laderaums einen Läderaumboden aufweisen, unterhalb dessen sich ein durch den Laderaumboden abdeckbarer Stauraum befindet. Der Laderaumboden ist üblicherweise um eine Achse, insbesondere eine Querachse des (Kraft)Fahrzeugs schwenk- bzw. klappbar.

Bei (Kraft)Fahrzeugen, bei denen der Laderaum über den Heckbereich des Fahrzeugs zugänglich ist, ist die Schwenkachse des Laderaumbodens üblicherweise beabstandet von dem hinteren Ende des Kraftfahrzeugs in Richtung der hinteren Sitze angeordnet. Zum Öffnen des Laderaumbodens kann dieser mit Hilfe eines Griffteils, das üblicherweise in der Nähe des hinteren Endes des Kraftfahrzeugs in dem Laderaumboden angeordnet ist, geöffnet und aufgeklappt bzw. aufgeschwenkt werden. Aufgrund der Klappachse im Bodenbereich des Laderaums sowie der oftmals eingeschränkten Platzverhältnisse nimmt der Laderaumboden in einer Offenstellung häufig einen Winkel von kleiner 90° in Bezug auf die Längsachse des Fahrzeugs ein.

Damit bei solchen Gegebenheiten während eines Be- und Entladens eines durch einen Laderaumboden abdeckbaren Laderaums der Laderaumboden ohne weiteres Zutun eines Nutzers seine Offenstellung beibehält, sind Halteeinrichtungen zum Halten des Laderaumbodens entwickelt worden.

So beschreibt beispielsweise die DE 10 2004 031 004 A1 eine Feststelleinrichtung für einen um eine Klappachse, insbesondere Querachse eines Fahrzeugs, aufklappbaren Laderaumboden in seiner aufgeklappten Position, wobei in einer etwa senkrecht zur Klappachse verlaufenden Seitenwand eines Laderaums ein Halteelement in einer etwa parallel zur Klappachse verlaufenden Richtung zwischen einer in die Seitenwand ein- und eine aus dieser ausgefahrene Position verlagerbar gelagert ist, das Halteelement zur Einnahme seiner ausgefahrenen Position federkraftbeaufschlagt ist und in seiner eingefahrenen Position durch einen an sich bekannten push-push-Mechanismus arretiert und aus dieser arretierten Position für ein Ausfahren nach Außen durch Druckbeaufschlagung aktivierbar ist.

Und aus der DE 10 2011 010 458 A1 ist eine Halteeinrichtung zum Halten eines Ladebodens, insbesondere für einen Kraftwagen, in einer Offenstellung bekannt, in welcher ein durch den Ladeboden verdeckbarer Stauraum zugänglich ist, wobei die Halteeinrichtung wenigstens ein elastisches Halteelement umfasst, welches in seinem deformierten Zustand ein Bewegen des Ladebodens zulässt und in seinem nicht-deformierten Zustand den Ladeboden indessen Offenstellung hält.

Eine Halterung gemäss dem Oberbegriff des Anspruchs 1 ist weiterhin aus der DE 10 2007 042371 bekannt.

Es ist Aufgabe der vorliegenden Erfindung eine im Vergleich zum vorbekannten Stand der Technik verbesserte Halteeinrichtung für einen Laderaumboden sowie ein verbessertes (Kraft)Fahrzeug zur Verfügung zu stellen. Diese Aufgaben werden gelöst durch die Halteeinrichtung gemäß Anspruch 1 sowie das Fahrzeug gemäß Anspruch 8. Vorteilhafte und zweckmäßige Weiterbildungen der Erfindung sind Gegenstand der Unteransprüche.

Erfindungsgemäß wird eine Halterung zur aufhebbaren Arretierung eines um eine Achse klappbaren Laderaumbodens in einem Fahrzeug in seiner aufgeklappten Position vorgeschlagen, die dadurch gekennzeichnet ist, dass eine Halteeinrichtung der Halterung in einem Einbauzustand von einer aus einer Oberfläche einer Laderaumverkleidung hervorragenden Ausgangsposition elastisch zumindest teilweise in die Laderaumverkleidung (Kofferraumverkleidung) schwenk- oder schiebbar ist, und in dem Teil der Halteeinrichtung, das in der Ausgangsposition aus der Laderaumverkleidung hervorragt, eine Leuchteinrichtung vorgesehen ist.

Die erfindungsgemäße Halterung weist den Vorteil auf, dass mit ihr nicht nur eine einfache und sichere aufhebbare Arretierung eines schwenkbaren Laderaumbodens möglich ist, sondern auch eine besonders vorteilhafte Positionierung der Leuchteinrichtung gegeben ist.

Gemäß einer ersten vorteilhaften Weiterbildung der erfindungsgemäßen Halterung weist im Einbauzustand der Halterung die Lichtaustrittsrichtung der Leuchteinrichtung im Wesentlichen in Richtung des Laderaumbodens in seiner nicht aufgeklappten Position.

Durch eine derartige Lichtaustrittsrichtung kann in vorteilhafter Weise eine Beleuchtung sowohl der Oberseite des Laderaumbodens in seiner nicht aufgeklappten Position erreicht werden, als auch eine Beleuchtung des sich unterhalb des Laderaumbodens befindlichen Stauraums, wenn sich der Laderaumboden in einer Offenstellung befindet.

Gemäß einer zweiten vorteilhaften Weiterbildung weist die Halteeinrichtung der Halterung wenigstens zwei einander im Wesentlichen diagonal gegenüberliegende, gekrümmte und/oder schräge erste und zweite Kanten auf, die derart ausgebildet sind, dass die Halteeinrichtung im Einbauzustand durch ein kontaktierendes Vorbeigleiten einer Kante des Laderaumbodens an der ersten oder zweiten Kante von einer Ausgangsposition in eine zumindest teilweise in die Laderaumverkleidung geschwenkte oder geschobene Position schwenk- oder schiebbar ist.

Durch diese Weiterbildung kann für einen Nutzer in besonders einfacher Weise eine aufhebbare Arretierung des Laderaumbodens dadurch erreicht werden, dass der Laderaumboden mit einer seiner (oftmals seitlichen) Kanten beim Aufklappen bzw. Aufschwenken an der ersten, im Einbauzustand oftmals unteren, in Richtung des Hecks des Fahrzeugs weisenden, gekrümmten und/oder schrägen Kante der Halteeinrichtung kontaktierend vorbeigleitet und durch den durch die Kante des Laderaumbodens auf die erste oder zweite Kante der Halteeinrichtung ausgeübten Druck die Halteeinrichtung zumindest teilweise in die Laderaumverkleidung geschwenkt oder geschoben wird. Sobald die Kante des Laderaumbodens bei dessen Weiterbewegung an der Halteeinrichtung vorbei bewegt worden ist, kehrt die Halteeinrichtung aufgrund ihrer elastischen Befestigung in ihre Ausgangsposition zurück. Lässt der Nutzer den Laderaumboden nun los, wird dieser durch die sich wieder in die Ausgangsposition zurückgekehrte Halteeinrichtung aufhebbar in einer Offenposition gehalten, d.h. die seitliche Kante des Laderaumbodens kommt auf der im Einbauzustand oftmals oberen zweiten Kante der Halteeinrichtung zu liegen.

Wendet der Nutzer nun Kraft auf die Oberseite des Laderaumbodens in Richtung des Stauraums aus, so erhöht sich über die aufliegende Kante des Laderaumbodens der Druck auf die zweite, gekrümmte und/oder schräge Kante der Halteeinrichtung. Durch die elastische Schwenk- bzw. Schiebbarkeit der Halteeinrichtung weicht die Halteeinrichtung dem Druck in Richtung der Laderaumverkleidung aus und gleitet die aufliegende Kante des Laderaumbodens an der zweiten Kante der Halteeinrichtung entlang. Hierdurch wird die Halteeinrichtung erneut zumindest teilweise in die Laderaumverkleidung geschwenkt oder geschoben. Hat die aufliegende Kante des Laderaumbodens die Halteeinrichtung passiert, kehrt diese aufgrund ihrer elastischen Befestigung wieder in ihre Ausgangsposition zurück. Der Laderaumboden kann durch die Nutzer nun bis hin zu einer Endposition abgesenkt werden.

Gemäß einer weiteren vorteilhaften Weiterbildung der Erfindung weist die Halteeinrichtung zwei einander im Wesentlichen diagonal gegenüberliegende gekrümmte und/oder schräge erste und zweite Kanten auf, die derart ausgebildet sind, dass die Halteeinrichtung in einem ersten Einbauzustand durch ein kontaktierendes Vorbeigleiten einer Kante des Laderaumbodens an der ersten oder zweiten Kante von einer Ausgangsposition in eine zumindest teilweise in die Laderaumverkleidung geschwenkte oder geschobene Position schwenk- oder schiebbar ist. Weiter weist die Halteeinrichtung gemäß dieser Weiterbildung zwei einander im Wesentlichen diagonal gegenüberliegende gekrümmte und/oder schräge dritte und vierte Kanten auf, die derart ausgebildet sind, dass die Halteeinrichtung in einem zweiten Einbauzustand durch ein kontaktierendes Vorbeigleiten einer Kante des Laderaumbodens an der dritten oder vierten Kante von der Ausgangsposition in die zumindest teilweise in die Laderaumverkleidung geschwenkte oder geschobene Position verschwenk- oder verschiebbar ist.

Durch eine derartige Ausgestaltung kann in vorteilhafter Weise und ohne Einbuße an Funktionalität die erfindungsgemäße Halterung in zwei, einander beispielsweise im Wesentlichen gegenüberliegenden und zueinander weisenden Laderaumverkleidungen angeordnet werden. Somit braucht beispielsweise für eine linksseitige und eine rechtsseitige Laderaumverkleidung lediglich eine Ausgestaltung der erfindungsgemäßen Halterung hergestellt werden, wodurch sich Kostenvorteile ergeben.

Gemäß einer weiteren vorteilhaften Weiterbildung der Erfindung weist die Leuchteinrichtung in der erfindungsgemäßen Halterung eine Lichtemittierende Diode auf. Mittels einer Lichtemittierenden Diode kann in vorteilhafter Weise eine langlebige und energieeffiziente Leuchteinrichtung realisiert werden.

Gemäß noch einer weiteren vorteilhaften Weiterbildung der Erfindung weist die Halterung wenigstens ein Federmittel zum elastischen Schwenken oder Schieben der Halterung auf, wobei das wenigstens eine Federmittel im Ausgangszustand der Halterung einen geringer gespannten Zustand aufweist als im geschwenkten oder geschobenen Zustand.

Durch diese Weiterbildung ergibt sich in vorteilhafter Weise die Möglichkeit, dass je nach den Gegebenheiten in Bezug auf den Laderaumboden (beispielsweise Gewicht des Laderaumbodens, Auflagewinkel einer seitlichen Kante des Laderaumbodens auf der Halteeinrichtung in einer Offenstellung) und/oder in Bezug auf die äußere Gestaltung der Halteeinrichtung (beispielsweise Schräge und/oder Krümmung der Kanten) ein Federmittel mit einer für die jeweilige Situation angepassten und/oder geeigneten Federkonstante ausgewählt und verwendet werden kann.

Gemäß noch einer weiteren vorteilhaften Weiterbildung der Erfindung weist die Halterung weiter eine Schalteinrichtung zum Ein- und Ausschalten des Lichts der Leuchteinrichtung auf oder ist mit einer derartigen Schalteinrichtung elektrisch verbindbar.

Weist die erfindungsgemäße Halterung eine Schalteinrichtung zum Ein- und Ausschalten des Lichts auf, kann in vorteilhafter Weise das Licht der Halterung beispielsweise unabhängig von einem Öffnungszustand einer Fahrzeugtür ein- und ausgeschaltet werden. Dies ist beispielsweise bei einem Fahrzeug von Vorteil, bei dem ein Laderaumboden von einem im Fahrzeug befindlichen Nutzer geöffnet und geschlossen werden kann.

Ist die Halterung mit einer Schalteinrichtung zum Ein- und Ausschalten des Lichts elektrisch verbindbar, so ergibt sich der Vorteil, dass das Licht der Halterung beispielsweise über einen Schalter im Bereich des Armaturenbretts und/oder in Abhängigkeit von einem Öffnungszustand einer Fahrzeugtür ein- und ausgeschaltet werden kann.

Die vorliegende Erfindung umfasst auch ein Fahrzeug, insbesondere Kraftfahrzeug, das dadurch gekennzeichnet ist, dass es wenigstens eine erfindungsgemäße Halterung nach einem der Ansprüche 1 bis 7 aufweist.

Gemäß einer ersten vorteilhaften Weiterbildung weist das Fahrzeug wenigstens eine Halterung nach einem der Ansprüche 1 bis 7 in wenigstens einer längsseitigen Laderaumverkleidung auf. Und gemäß einer zweiten vorteilhaften Weiterbildung weist das Fahrzeug je eine Halterung nach einem der Ansprüche 1 bis 7 in einer rechten und einer linken längsseitigen Laderaumverkleidung auf.

Die vorliegende Erfindung wird nachfolgend anhand der beigefügten Zeichnungen näher erläutert.

Es zeigen rein schematisch:
- Fig. 1: die Sichtseite eines Beispiels einer erfindungsgemäßen Halterung im nicht eingebauten Zustand;
- Fig. 2: die Rückseite eines Beispiels einer erfindungsgemäßen Halterung im nicht eingebauten Zustand;
- Fig. 3: die Rückseite eines Beispiels einer erfindungsgemäßen Halterung im nicht eingebauten Zustand mit Leuchtstein, Platine, Kabel und Stecker;
- Fig. 4: die Rückseite eines Beispiels einer erfindungsgemäßen Halterung im nicht eingebauten Zustand mit Abdeckung, Kabel, Stecker und Federmittel; und
- Fig. 5: einen Ausschnitt aus einem Beispiel einer Laderaumverkleidung mit einem Beispiel einer aus der Oberfläche der Laderaumverkleidung in ihrer Ausgangsposition hervorragenden Halterung.

Innerhalb der Figuren sind gleiche, funktionsgleiche oder funktionsähnliche Elemente mit den gleichen Bezugszeichen versehen.

Die nachfolgend näher geschilderten Ausführungsbeispiele stellen bevorzugte Ausführungsformen der vorliegenden Erfindung dar. Die vorliegende Erfindung ist selbstverständlich nicht auf diese Ausführungsformen beschränkt.

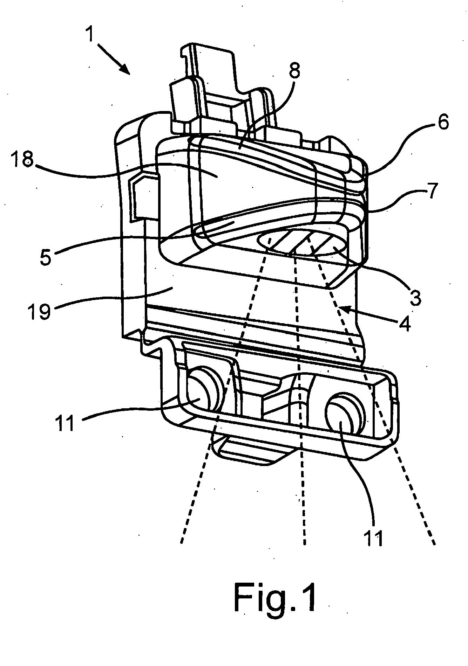

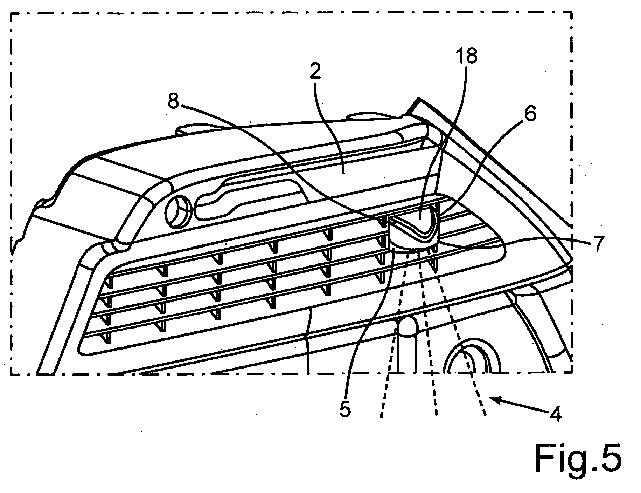

Fig. 1 ist eine graphische Darstellung einer "Sichtseite" eines Beispiels einer erfindungsgemäßen Halterung 1 im nicht eingebauten Zustand. Die Sichtseite zeigt unter anderem den Teil der erfindungsgemäßen Halterung 1, der in einem Einbauzustand in einer Ausgangsposition aus einer Oberfläche einer Laderaumverkleidung hervorragt. Dies sind im in Fig. 1 dargestellten Beispiel die Halteeinrichtung 18 in Form einer "Rastnase" mit der Leuchteinrichtung 3 sowie der ersten, zweiten, dritten und vierten Kante 5, 6, 7, 8. Diesbezüglich wird auf Fig. 5 verwiesen, in der das in Fig. 1 dargestellte Ausführungsbeispiel in einem in eine Laderaumverkleidung eingebauten Zustand gezeigt ist.

Neben der im eingebauten Zustand sichtbaren Elemente der erfindungsgemäßen Halterung 1 zeigt Fig. 1 auch Elemente der erfindungsgemäßen Halterung 1, die in einem Einbauzustand nicht sichtbar sind, wie beispielsweise der Grundkörper 19 der Halterung 1 mit den Öffnungen 11, mit Hilfe derer die Halterung 1 beispielsweise an einer Laderaumverkleidung 2 befestigt werden kann.

Die erfindungsgemäße Halterung 1 weist in dem in Fig. 1 dargestellten Ausführungsbeispiel eine "Rastnase" als Halteeinrichtung 18 auf. Die Rastnase 18 ist beispielsgemäß ausgebildet durch einen Hohlkörper mit vier Mantelflächen, die ähnlich einer Viereckspyramide angeordnet sind. Jedoch sind die Mantelflächen und dementsprechend auch die Kanten 5, 6, 7, 8 der Mantelflächen gekrümmt und endet der Hohlkörper nicht in einer Spitze, sondern in Form einer vorderen, (von dem Grundkörper 19 aus gesehen) distalen, abgerundeten Fläche.

Innerhalb einer Mantelfläche der Rastnase 18 ist eine Öffnung 10 für eine Leuchteinrichtung 3 vorgesehen. Diese Mantelfläche der Rastnase 18 ist in einem Einbauzustand der Halterung 1 in einem Fahrzeug, insbesondere in einem Kraftfahrzeug, bevorzugt diejenige Fläche, die im Wesentlichen in Richtung des Laderaumbodens in dessen geschlossenem Zustand weist. Auch die Lichtaustrittsrichtung 4 der Leuchteinrichtung 3 weist in einem Einbauzustand im Wesentlichen in Richtung des Laderaumbodens in seiner nicht aufgeklappten Position bzw. in Richtung des darunter/dahinter befindlichen Stauraums.

Mittels der zwei schrägen und gekrümmten Kanten 5, 6 kann die Halterung auf eine besonders einfache Weise durch ein kontaktierendes daran entlang Gleiten einer Kante des Laderaumbodens von der Ausgangsposition in eine zumindest teilweise in die Laderaumverkleidung geschwenkte oder geschobene Position geschwenkt oder geschoben werden.

Ausgehend von einer häufig verwendeten Ausgestaltung eines Laderaumbodens mit einer Klappachse (Schwenkachse), die im Wesentlichen quer zur Längsachse eines Fahrzeugs verläuft, bewegen sich die seitlichen Kanten eines Laderaumbodens, sofern dieser geöffnet oder geschlossen wird, im Wesentlichen entlang der Oberfläche von im Fahrzeug vorgesehenen seitlichen Laderaumverkleidungen 2.

Wenn nun ein ausreichend geringer Abstand zwischen einer seitlichen Kante des Laderaumbodens und einer seitlichen Laderaumverkleidung 2 vorgesehen ist, wird bei einer geeigneten Anordnung der erfindungsgemäßen Halterung 1 innerhalb der seitlichen Laderaumverkleidung 2 beim Öffnen des Laderaumbodens eine der seitlichen Kanten des Laderaumbodens bei einem bestimmten und vorgebbaren Öffnungswinkel mit der schrägen und gekrümmten Kante 5 der Halteeinrichtung 18 in Kontakt kommen. Wird der Laderaumboden weiter geöffnet, übt die seitliche Kante des Laderaumbodens Druck auf die schräge und gekrümmte Kante 5 und damit auf die gesamte Halteeinrichtung 18 in Richtung der Oberfläche der seitlichen Laderaumverkleidung 2 aus.

Da die Halteeinrichtung 18 auf eine elastische Weise in die seitliche Laderaumverkleidung 2 schwenk- oder schiebbar ist, wird durch den durch die seitliche Kante des Laderaumbodens ausgeübten Druck die Halteeinrichtung 18 zumindest teilweise in die Laderaumverkleidung 2 geschwenkt oder geschoben.

Sobald die seitliche Kante des Laderaumbodens an der Kante 5 und der sich daran anschließenden abgerundeten vorderen Fläche vorbei geglitten ist, wird die Halteeinrichtung 18 aufgrund ihrer elastischen Aufhängung wieder aus der seitlichen Laderaumverkleidung hervor schwenken beziehungsweise wieder aus der seitlichen Laderaumverkleidung heraus geschoben.

Das Ausmaß, mit dem sich die Halteeinrichtung 18 wieder aus der seitlichen Laderaumverkleidung 2 hervor schwenken beziehungsweise heraus schieben kann, ist davon abhängig, ob und wenn ja an welcher Stelle Kontakt der schrägen und gekrümmten Kante 6 mit der seitlichen Kante des Laderaumbodens besteht. Je weiter eine solche Kontaktstelle von der vorderen gerundeten Fläche der Rastnase 18 entfernt ist, umso weiter kann die Halteeinrichtung 18 wieder aus der seitlichen Laderaumverkleidung in Richtung ihrer Ausgangsposition zurückschwenken beziehungsweise zurückgeschoben werden.

Ist die seitliche Kante des Laderaumbodens an der zweiten Kante 6 vorbei geglitten und beträgt der Öffnungswinkel zwischen Laderaumboden und der Horizontalen kleiner 90°, wird der Laderaumboden zumindest mit seiner seitlichen Kante bei einem Loslassen durch einen Nutzer aufgrund der Schwerkraft auf der zweiten Kante 6 der sich nun wieder in der Ausgangsposition befindlichen Halteeinrichtung 18 zu liegen kommen.

Durch eine geeignete Auswahl beziehungsweise Kombination von Schräge und/oder Krümmung der zweiten Kante 6 sowie der Federkonstante für das Mittel für die elastische Schwenk- bzw. Schiebbarkeit der Halteeinrichtung 18 unter Berücksichtigung des Gewichts des Laderaumbodens und des Auflagewinkels seiner seitlichen Kante auf der zweiten Kante 6 kann erreicht werden, dass die Halteeinrichtung 18 in einer im Wesentlichen der Ausgangsposition entsprechenden Position verbleibt, wenn die seitliche Kante des Laderaumbodens auf der zweiten Kante 6 zu liegen kommt. Hierdurch ist eine aufhebbare Arretierung des Laderaumbodens erreicht.

Übt ein Nutzer ausgehend von der gerade geschilderten Situation nun derart Druck (Kraft) auf den Laderaumboden aus, dass der Druck der seitlichen Kante des Laderaumbodens auf die zweite Kante 6 größer ist, als dies aufgrund der Schwerkraft der Fall ist, wird die Halteeinrichtung 18 aufgrund ihrer elastischen Schwenk- bzw. Schiebbarkeit diesem erhöhten Druck ausweichen und von der Ausgangsposition wieder in eine zumindest teilweise in die Laderaumverkleidung eingeschwenkte oder eingeschobene Position geschwenkt oder geschoben. Hierbei ist das Ausmaß des Einschwenkens bzw. Einschiebens wieder abhängig von der Position der seitlichen Kante des Laderaumbodens entlang der zweiten Kante 6.

Wenn die seitliche Kante des Laderaumbodens über die zweite Kante 6, die abgerundete vordere (von der Oberfläche des Grundkörpers 19 aus betrachtet distale) Fläche der Halteeinrichtung 18 sowie die erste Kante 5 geglitten ist, kann der Laderaumboden weiter bis hin zu einer zugeklappten Position bewegt werden. Sobald die seitliche Kante des Laderaumbodens keinen Kontakt mehr mit der ersten Kante 5 hat, ist bzw. wird die Halteeinrichtung 18 vollständig in ihre Ausgangsposition zurückgekehrt/zurückkehren.

Im in Fig. 1 gezeigten Ausführungsbeispiel weist die Halteeinrichtung 18 in Form einer Rastnase über eine zu der ersten Kante 5 spiegelsymmetrisch ausgebildete dritte Kante 7, sowie eine zu der zweiten Kante 6 spiegelsymmetrisch ausgebildete vierte Kante 8 auf (die Spiegelebene verläuft vom distalen Ende der vorderen, distalen, abgerundeten Fläche in Richtung zum Grundkörper 19, wobei die Spiegelebene senkrecht von oben nach unten verläuft und die Oberfläche des Grundkörpers 19 im Wesentlichen unter einem Winkel von 90° schneidet). Hierdurch ergibt sich der Vorteil, dass ein und dieselbe Ausführungsform der Halterung 1 sowohl in der oben beschriebenen Einbauposition verwendet werden kann, als auch in einer Einbauposition, bei der eine seitliche Kante eines Laderaumbodens, wenn dieser geöffnet wird, an der dritten Kante 7, und bei der die seitliche Kante des Laderaumbodens, wenn dieser wieder geschlossen wird, an der vierten Kante 8 kontaktierend vorbeigleitet.

Als ein typisches Beispiel für eine derartige "doppelte" Verwendung der erfindungsgemäßen Halterung 1 sei hier der Fall genannt, dass in einem Fahrzeug, insbesondere einem Kraftfahrzeug, in dessen Heckbereich in beiden längsseitigen Laderaumverkleidungen je eine erfindungsgemäße Halterung 1 vorgesehen ist. In diesem Fall kann ein Laderaumboden in einem geöffneten Zustand durch das Auffliegen seiner beiden seitlichen Kanten auf den beiden erfindungsgemäßen Halterungen 1 noch sicherer gehalten werden, als dies bei nur einer erfindungsgemäßen Halterung 1 der Fall wäre.

Selbstverständlich ist ein symmetrischer Aufbau der erfindungsgemäßen Halterung 1 mit vier schrägen und/oder krummen Kanten der Halteeinrichtung 18 nicht obligatorisch. Soll die Halteeinrichtung 18 in Form einer Rastnase ausgebildet sein, die durch ein kontaktierendes Vorbeigleiten einer Kante eines Laderaumbodens zumindest teilweise in eine Laderaumverkleidung geschwenkt beziehungsweise geschoben werden kann, und sind weiter zwei im Wesentlichen einander gegenüberliegend angeordnete erfindungsgemäße Halterungen 1 in dem Fahrzeug vorgesehen, so kann beispielsweise eine erste Halterung 1 die erste Kante 5 sowie die zweite Kante 6 aufweisen, und eine zweite Halterung 1 die dritte Kante 7 und die vierte Kante 8. Zwar wären bei eine solchen Konstellation zwei verschieden ausgestaltete Halterungen 1 erforderlich, andererseits ergäbe sich aber auch ein größerer Gestaltungsspielraum für die äußere Form der beispielhaften Halterung 1.

Die geeignete Krümmung/Schräge der Kanten und damit auch die Form der Mantelflächen einer Rastnase kann von einem Fachmann mit einigen wenigen Versuchen beispielsweise auf Grundlage der Einbauposition des Laderaumbodens (Auflagepunkt und Auflagewinkel einer Kante des Laderaumbodens in einer Offenstellung auf der Halteeinrichtung 18) sowie dem Gewicht des Laderaumbodens ermittelt werden. Gleiches gilt für die Federkonstante der Mittel, durch die Halteeinrichtung 18 elastisch zumindest teilweise in die Laderaumverkleidung schwenk- oder schiebbar ist. Die Schräge bzw. Krümmung der ersten und dritten Kante 5, 7 kann hierbei von der Schräge bzw. Krümmung der zweiten und vierten Kante 6, 8 abweichen.

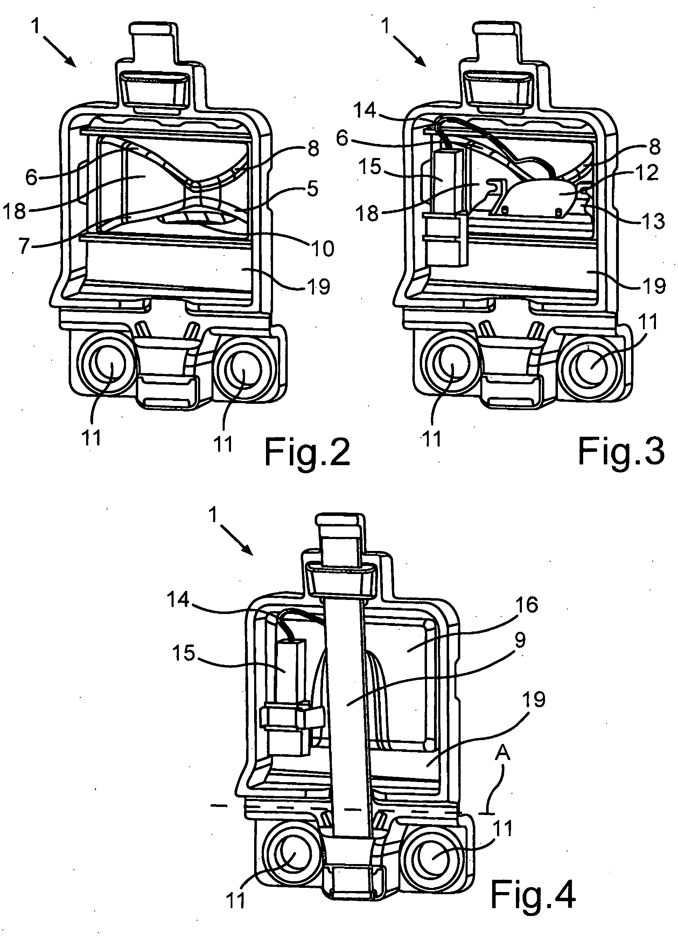

Die Rückseite der in Fig. 1 dargestellten erfindungsgemäßen Halterung 1 ist Gegenstand der Darstellung von Fig. 2. Wie bereits oben geschildert, weist die Halteeinrichtung 18 (Rastnase) im dargestellten Beispiel in einer Mantelfläche die Öffnung 10 für die Leuchteinrichtung 3 auf. Für die Art und den Aufbau der Leuchteinrichtung 3 gibt es keine besonderen Einschränkungen und es kann jede geeignete Leuchteinrichtung 3 verwendet werden, beispielsweise eine Leuchteinrichtung 3 mit einer Glühlampe, Gasentladungslampe oder einer Lichtemittierenden Diode (anorganische Lichtemittierende Diode(n) und/oder organische Lichtemittierende Diode(n)) als Leuchtmittel. Weiter kann die Leuchteinrichtung 3 einen Lichtleitkörper zur Streuung, Leitung, Reflektion und/oder Ablenkung der von dem Leuchtmittel ausgesandten Lichtstrahlen aufweisen (beispielsweise in Form einer Streuscheibe, Lichtleiters, Leuchtsteins, Reflektors), insbesondere um die Lichtstrahlen im Wesentlichen in Richtung des Laderaumbodens in seinem nicht geöffneten Zustand oder im Wesentlichen in Richtung des darunter befindlichen Stauraums zu lenken. So kann der Lichtleitkörper auch dazu dienen, eine möglichst gleichmäßige Helligkeitsverteilung in dem von der Leuchteinrichtung 3 beleuchtbaren Bereich des Laderaumbodens oder des darunter/dahinter befindlichen Stauraums zu erreichen.

In einem bevorzugten Fall weist die Leuchteinrichtung 3 als Leuchtmittel eine oder mehrere Lichtemittierende Diode(n) (anorganische Lichtemittierende Diode(n) und/oder organische Lichtemittierende Diode(n)) auf. Wie dies in Fig. 3 schematisch angedeutet ist, weist eine derartige Leuchteinrichtung 3 eine Platine 12 auf, die die Lichtemittierende Diode(n) sowie die zum Ansteuern der Lichtemittierenden Diode(n) erforderlichen elektronischen Bauteile enthält. Eine derartige Platine kann mit einem Körper 13 zur Streuung, Leitung, Reflektion und/oder Ablenkung (beispielsweise in Form einer Streuscheibe, Lichtleiters, Leuchtsteins, Reflektors) der von der Lichtemittierende Diode ausgesandten Lichtstrahlen (gegebenenfalls lösbar) verbunden sein. Die Leuchteinrichtung 3 wird derart innerhalb der Halteeinrichtung 18 positioniert, dass die von der Lichtemittierende Diode(n) erzeugten Lichtstrahlen durch die Öffnung 10 im Wesentlichen in Richtung des Laderaumbodens in seinem nicht geöffneten Zustand oder im Wesentlichen in Richtung des darunter befindlichen Stauraums abgestrahlt werden.

Zur Versorgung der Leuchteinrichtung 3 mit elektrischem Strom sind im Fig. 3 dargestellten Beispiel weiter Kabelmittel 14 vorgesehen, die mit einem Stecker 15 elektrisch verbunden sind. Diese Kabelmittel 14 sind im Einbauzustand mit Hilfe des Steckers 15 an eine Stromversorgung des Fahrzeugs angeschlossen. Die Stromversorgung der Leuchteinrichtung 3 kann jedoch auch auf andere Weise und mit anderen Mitteln erfolgen.

Des Weiteren kann, wie in Fig. 4 schematisch dargestellt ist, die Halterung 1 optional eine Abdeckung 16, beispielsweise zur Vermeidung von Streulicht aufweisen.

Um eine elastische Verschwenk- oder Verschiebbarkeit der beispielhaften Halterung 1 mit der Halteeinrichtung 18 zu erreichen, kann, wie dies im in Fig. 4 dargestellten Beispiel der Fall ist, ein bandförmiges Federmittel 9 vorgesehen sein. Selbstverständlich können beliebige andere Mittel verwendet werden, die dazu geeignet sind, eine elastische Schwenk- oder Schiebbarkeit der erfindungsgemäßen Halterung 1 zu erreichen. Als weitere Beispiele für derartige Mittel seien erwähnt gummielastische Mittel, Spiralfedern, elastische Schaumstoffe, etc.

Beim im Fig. 4 dargestellten Beispiel ist die Halteeinrichtung 18 im Wesentlichen um eine Achse A schwenkbar. Selbstverständlich ist diese Art der Schwenkbarkeit nicht zwingend und es können andere geeignete Achsen für eine Schwenkbarkeit gewählt werden. Im Falle einer Verschiebbarkeit der Halterung 1 können beispielsweise geeignete Führungselemente (Schienenelemente) vorgesehen sein, innerhalb der und/oder auf denen die erfindungsgemäße Halterung 1 hin und her gleiten kann.

Im in den Figuren dargestellten Beispiel weist die Halterung 1 innerhalb seines Grundkörpers 19 zwei Öffnungen 11 auf, mit Hilfe dessen die Halterung 1 beispielsweise an einer seitlichen Laderaumverkleidung befestigt werden kann. Für die Befestigungsmittel bestehen keine besonderen Einschränkungen und es können alle geeigneten Mittel verwendet werden, wie beispielsweise Schrauben, Nieten, Klipse, Klammern, etc. Auch ist es selbstverständlich möglich, die Halterung 1 auf jede andere geeignete Weise unter Verwendung von Kraftschluss, Formschluss oder Stoffschluss zu befestigen. Auch braucht die Befestigung der Halterung 1 nicht an einer Laderaumverkleidung 2 erfolgen, sondern kann beispielsweise auch an Elementen der Karosserie vorgesehen sein.

Auch wenn mit Hilfe der Figuren und der Figurenbeschreibung insbesondere auf ein Ausführungsbeispiel einer Halterung 1 mit einer Halteeinrichtung 18 mit abgeschrägten/gekrümmten Kanten eingegangen wurde, so ist die vorliegende Erfindung nicht darauf beschränkt. Selbstverständlich sind andere Ausgestaltungen der erfindungsgemäßen Halterung 1 und der darin vorhandenen Halteeinrichtung 18 denkbar, beispielsweise in Form einer im Wesentlichen stabförmigen (runden, eckigen) Halteeinrichtung 18. Bei einer solchen Ausgestaltung der erfindungsgemäßen Halterung 1 kann ein elastisches Ein- und Ausschwenken bzw. elastisches Ein- und Ausschieben der Halteeinrichtung 18 beispielsweise durch eine geeignetes Zusammenwirken von einem Sensormittel und einem Aktor erreicht werden.

Wenn durch das Sensormittel ein Anheben bzw. Aufklappen eines Laderaumbodens detektiert wird und beispielsweise ein gewisser vorgebbarer Öffnungswinkel überschritten ist, können bei diesem Ausführungsbeispiel mittels eines geeigneten Aktors (beispielsweise Elektromotor) die Halteeinrichtung 18 in Richtung der Oberfläche der Laderaumverkleidung geschwenkt oder gezogen werden. Wird durch das Sensormittel weiter festgestellt, dass der Öffnungswinkel des Laderaumbodens so groß ist, dass sich eine Kante des Laderaumbodens an der Halteeinrichtung 18 vorbei bewegt hat, kann die Einwirkung des Aktors beendet werden und die Halteeinrichtung 18 schwenkt bzw. gleitet aufgrund ihrer elastischen Befestigung in die Ausgangsposition zurück. Nun kann ein Nutzer den Laderaumboden loslassen und dieser kommt aufgrund der Schwerkraft auf der Halteeinrichtung 18 zum Liegen.

Wenn durch das Sensormittel danach ein erneutes Anheben (Hochklappen) des Laderaumbodens um einen gegebenenfalls vorgebbaren Winkel feststellt wird, kann dies als Signal dafür gewertet werden, dass der Nutzer den Laderaumboden wieder absenken möchte. Daher kann in diesem Fall vorgesehen sein, dass mittels des Aktors die Halteeinrichtung 18 wieder in Richtung der Oberfläche der Laderaumverkleidung geschwenkt oder gezogen wird. Der Laderaumboden kann dann ohne Weiteres wieder in seine Ausgangsposition abgesenkt werden. Wird durch das Sensormittel ein ausreichend weites Absenken des Laderaumbodens festgestellt, kann die Einwirkung des Aktors wieder beendet werden und die Halteeinrichtung 18 schwenkt bzw. gleitet aufgrund ihrer elastischen Befestigung wieder in die Ausgangsposition zurück.

In Bezug auf das Material der erfindungsgemäßen Halterung bestehen keine besonderen Beschränkungen und diese kann aus jedem geeigneten Material, jeder geeigneten Materialkombination oder Materialmischung hergestellt sein. Beispielsweise kann die der Grundkörper 19 sowie die Halteeinrichtung 18 im Wesentlichen aus einem Kunststoff, wie beispielsweise Polypropylen, oder aus einem Metall hergestellt sein. Kanten bzw. Flächen der erfindungsgemäßen Halterung 1, die einer verstärkten mechanischen Belastung (z.B. aufgrund von Reibung durch eine Kante des Laderaumbodens) ausgesetzt sind, können beispielsweise aus einem in Bezug auf die mechanische Belastung beständigeren Material ausgebildet sein, als der restliche Teil der erfindungsgemäßen Halterung 1.

Die vorliegende Erfindung umfasst auch ein Fahrzeug, insbesondere Kraftfahrzeug, das dadurch gekennzeichnet ist, dass es wenigstens eine erfindungsgemäße Halterung 1 aufweist. Durch die erfindungsgemäße Halterung 1 wird ein Fahrzeug zur Verfügung gestellt, dass im Vergleich zu vorbekannten Fahrzeugen mit einem Laderaumboden einen deutlich verbesserten Komfort für einen Nutzer bietet. Durch die in der erfindungsgemäßen Halterung 1 vorgesehene Leuchteinrichtung 3 ist darüber hinaus insbesondere eine verbesserte Be- bzw. Ausleuchtung der Fläche des Laderaumbodens bzw. des unter einem Laderaumboden befindlichen Stauraums erreichbar, als dies beispielsweise mittels einer Leuchteinrichtung im Dachhimmel oder in einer seitlichen Laderaumverkleidung möglich ist.

Wenn, wie dies gemäß einer vorteilhaften Weiterbildung des erfindungsgemäßen Fahrzeugs vorgesehen ist, je eine erfindungsgemäße Halterung 1 in der linksseitigen und rechtsseitigen Laderaumverkleidung vorgesehen ist, kann nicht nur eine besonders sichere und zuverlässige aufhebbare Arretierung eines Laderaumbodens erreicht werden, sondern aufgrund der dann auch doppelt vorhandenen Leuchteinrichtung 3 eine besonders gleichmäßige und gegebenenfalls auch besonders helle Ausleuchtung der Fläche des Laderaumbodens bzw. des darunter befindlichen Stauraums.

## Patentansprüche

1. Halterung (1) zur aufhebbaren Arretierung eines um eine Achse klappbaren Laderaumbodens in einem Fahrzeug in seiner aufgeklappten Position,
**dadurch gekennzeichnet, dass**
eine Halteeinrichtung (18) der Halterung (1) in einem Einbauzustand von einer aus einer Oberfläche einer Laderaumverkleidung (2) hervorragenden Ausgangsposition elastisch zumindest teilweise in die Laderaumverkleidung schwenk- oder schiebbar ist, und
in dem Teil der Halteeinrichtung (18), das in der Ausgangsposition aus der Laderaumverkleidung (2) hervorragt, eine Leuchteinrichtung (3) vorgesehen ist.

2. Halterung (1) nach Anspruch 1,
**dadurch gekennzeichnet, dass**
im Einbauzustand die Lichtaustrittsrichtung (4) der Leuchteinrichtung (3) im Wesentlichen in Richtung des Laderaumbodens in seiner nicht aufgeklappten Position weist.

3. Halterung (1) nach Anspruch 1 oder 2,
**dadurch gekennzeichnet, dass**
die Halteeinrichtung (18) wenigstens zwei einander im Wesentlichen diagonal gegenüberliegende, gekrümmte und/oder schräge erste und zweite Kanten (5, 6) aufweist, die derart ausgebildet sind, dass die Halteeinrichtung (18) im Einbauzustand durch ein kontaktierendes Vorbeigleiten einer Kante des Laderaumbodens an der ersten oder zweiten Kante (5, 6) von der Ausgangsposition in die zumindest teilweise in die Laderaumverkleidung geschwenkte oder geschobene Position schwenk- oder schiebbar ist.

4. Halterung (1) nach Anspruch 3,
**dadurch gekennzeichnet, dass**
die Halteeinrichtung (18) zwei einander im Wesentlichen diagonal gegenüberliegende gekrümmte und/oder schräge erste und zweite Kanten (5, 6) aufweist, die derart ausgebildet sind, dass die Halteeinrichtung (18) in einem ersten Einbauzustand durch ein kontaktierendes Vorbeigleiten einer Kante des Laderaumbodens an der ersten oder zweiten Kante (5, 6) von der Ausgangsposition in die zumindest teilweise in die Laderaumverkleidung geschwenkte oder geschobene Position schwenk- oder schiebbar ist, und
die Halteeinrichtung (18) zwei einander im Wesentlichen diagonal gegenüberliegende gekrümmte und/oder schräge dritte und vierte Kanten (7, 8) aufweist, die derart ausgebildet sind, dass die Halteeinrichtung (18) in einem zweiten Einbauzustand durch ein kontaktierendes Vorbeigleiten einer Kante des Laderaumbodens an der dritten oder vierten Kante (7, 8) von der Ausgangsposition in die zumindest teilweise in die Laderaumverkleidung geschwenkte oder geschobene Position schwenk- oder schiebbar ist.

5. Halterung (1) nach einem der vorhergehenden Ansprüche,
**dadurch gekennzeichnet, dass**
die Leuchteinrichtung (3) eine Lichtemittierende Diode aufweist.

6. Halterung (1) nach einem der vorhergehenden Ansprüche,
**dadurch gekennzeichnet, dass**
sie wenigstens ein Federmittel (9) zum elastischen Schwenken oder Schieben der Halteeinrichtung (18) aufweist, wobei das wenigstens eine Federmittel (9) im Ausgangszustand der Halteeinrichtung (18) einen geringer gespannten Zustand aufweist als im geschwenkten oder geschobenen Zustand.

7. Halterung (1) nach einem der vorhergehenden Ansprüche,
**dadurch gekennzeichnet, dass**
sie weiter eine Schalteinrichtung zum Ein- und Ausschalten des Lichts der Leuchteinrichtung (3) aufweist oder mit einer derartigen Schalteinrichtung elektrisch verbindbar ist.

8. Fahrzeug, insbesondere Kraftfahrzeug,
**dadurch gekennzeichnet, dass**
es wenigstens eine Halterung (1) nach einem der Ansprüche 1 bis 7 aufweist.

9. Fahrzeug nach Anspruch 8,
**dadurch gekennzeichnet, dass**
es wenigstens eine Halterung (1) nach einem der Ansprüche 1 bis 7 in wenigstens einer längsseitigen Laderaumverkleidung (2) aufweist.

10. Fahrzeug nach Anspruch 9,
**dadurch gekennzeichnet, dass**
es je eine Halterung (1) nach einem der Ansprüche 1 bis 7 in einer rechten und einer linken längsseitigen Laderaumverkleidung (2) aufweist.

## Claims

1. Bracket (1) for the releasable locking of a loading compartment floor in a vehicle, which can be folded about an axis, in its folded open position, **characterised in that** a holding device (18) of the bracket (1) in an installed state can be pivoted or pushed elastically at least partly into the loading compartment lining from a starting position projecting from a surface of a loading compartment lining (2) and a lighting device (3) is provided in the part of the holding device (18) that projects in the starting position from the loading compartment lining (2).

2. Bracket (1) according to claim 1, **characterised in that** in the installed state the light emitting direction (4) of the lighting device (3) points substantially in the direction of the loading compartment floor in its closed position.

3. Bracket (1) according to either claim 1 or claim 2, **characterised in that** the holding device (18) has at least two curved and/or oblique first and second edges (5, 6) arranged substantially diagonally opposite one other and configured such that the holding device (18) in the installed state can be pivoted or pushed from its starting position to the position pivoted or pushed at least partly into the loading compartment lining by a sliding contact of an edge of the loading compartment floor along the first or second edge (5, 6).

4. Bracket (1) according to claim 3, **characterised in that** the holding device (18) comprises two curved and/or oblique first and second edges (5, 6) which are essentially diagonally opposite one another, which are designed such that the holding device (18) in a first installation state can be pivoted or pushed by a sliding contact of an edge of the loading compartment floor along the first or second edge (5, 6) from the starting position into the position pivoted or pushed at least partly into the loading compartment lining, and the holding device (18) comprises two curved and/or oblique third and fourth edges (7, 8) which are essentially diagonally opposite one another which are designed such that the holding device (18) in a second installation state can be pivoted or pushed by a sliding contact of an edge of the loading compartment floor along the third or fourth edge (7, 8) from the starting position into the position pivoted or pushed at least partly into the loading compartment lining.

5. Bracket (1) according to any one of the preceding claims, **characterised in that** the lighting device (3) includes a light-emitting diode.

6. Bracket (1) according to any one of the preceding claims, **characterised in that** it comprises at least one spring member (9) configured to resiliently pivot or push the holding device (18), wherein the at least one spring member (9) in the starting position of the holding device (18) has lower tension than in the pivoted or pushed position.

7. Bracket (1) according to any one of the preceding claims, **characterised in that** it also comprises a switching device for switching the light of the lighting device (3) on and off or can be connected electrically to such a switching device.

8. Vehicle, in particular a motor vehicle, according to any one of claims 1 to 7, **characterised in that** it comprises at least one bracket (1).

9. Vehicle according to claim 8, **characterised in that** it comprises at least one bracket (1) according to any one of claims 1 to 7 in at least one longitudinal side loading compartment lining (2).

10. Vehicle according to claim 9, **characterised in that** it comprises a bracket (1) according to any one of claims 1 to 7 in both a right and a left longitudinal side loading compartment lining (2).

## Revendications

1. Fixation (1) permettant le blocage libérable d'un plancher d'espace de chargement pivotant autour d'un axe dans un véhicule dans sa position rabattue,
**caractérisée en ce que** :
un dispositif de soutien (18) de la fixation (1) peut pivoter ou coulisser dans un état encastré depuis une position de départ ressortant de la surface du revêtement (2) de l'espace de chargement de manière élastique au moins en partie dans le revêtement de l'espace de chargement et
il est prévu un dispositif d'éclairage (3) dans la partie du dispositif de soutien (18) qui dépasse en position de départ du revêtement (2) de l'espace de chargement.

2. Fixation (1) selon la revendication 1, **caractérisée en ce que**,
à l'état encastré, la direction (4) de sortie de la lumière du dispositif d'éclairage (3) est tournée sensiblement dans la direction du plancher de l'espace de chargement dans sa position non rabattue.

3. Fixation (1) selon la revendication 1 ou la
revendication 2,
**caractérisée en ce que** :
le dispositif de soutien (18) présente au moins deux première et seconde arêtes (5, 6) sensiblement en regard l'une de l'autre en diagonale, courbées et/ou inclinées qui sont conçus de sorte que le dispositif de soutien (18) puisse pivoter ou coulisser dans l'état encastré par glissement de contact d'une arête du plancher de l'espace de chargement sur la première ou la seconde arête (5, 6) de la position de départ dans la position obtenue par pivotement ou coulissement atteinte au moins en partie dans le revêtement de l'espace de chargement.

4. Fixation (1) selon la revendication 3, **caractérisée en ce que** :
le dispositif de soutien (18) présente deux première et seconde arêtes (5, 6) sensiblement en regard l'une de l'autre en diagonale, courbes et/ou inclinées qui sont conçues de sorte que le dispositif de soutien (18) puisse pivoter ou coulisser dans un premier état encastré par glissement de contact d'une arête du plancher de l'espace de chargement sur la première ou la seconde arête (5, 6) de la position de départ dans la position atteinte par pivotement ou coulissement au moins en partie dans le revêtement de l'espace de chargement, et
le dispositif de soutien (18) présente deux troisième et quatrième arêtes (7, 8) sensiblement en regard l'une de l'autre en diagonale, courbes et/ou inclinées qui sont conçues de sorte que le dispositif de soutien (18) puisse pivoter ou coulisser dans un second état encastré par glissement de contact d'une arête du plancher de l'espace de chargement sur la troisième ou la quatrième arête (7, 8) de la position de départ dans la position atteinte par pivotement ou coulissement au moins en partie dans le revêtement de l'espace de chargement.

5. Fixation (1) selon l'une quelconque des revendications précédentes,
**caractérisée en ce que** :
le dispositif d'éclairage (3) présente une diode électroluminescente.

6. Fixation (1) selon l'une quelconque des revendications précédentes,
**caractérisée en ce que** :
elle présente au moins un moyen à ressort (9) pour le pivotement ou le coulissement élastique du dispositif de soutien (18), dans laquelle le au moins un moyen à ressort (9) présente dans l'état de départ du dispositif de soutien (18) un état moins tendu que dans l'état atteint par pivotement ou coulissement.

7. Fixation (1) selon l'une quelconque des revendications précédentes,
**caractérisée en ce que** :
elle présente en outre un dispositif de commutation pour connecter et déconnecter la lumière du dispositif d'éclairage (3) ou peut être connectée électriquement à un tel dispositif de commutation.

8. Véhicule, en particulier véhicule automobile, **caractérisé en ce que** :
il présente au moins une fixation (1) selon l'une quelconque des revendications 1 à 7.

9. Véhicule selon la revendication 8,
**caractérisé en ce que** :
il présente au moins une fixation (1) selon l'une quelconque des revendications 1 à 7 dans au moins un revêtement (2) de l'espace de chargement longitudinal.

10. Véhicule selon la revendication 9,
**caractérisé en ce que** :
il présente respectivement une fixation (1) selon l'une quelconque des revendications 1 à 7 dans un revêtement (2) de l'espace de chargement longitudinal de droite et de gauche.
